# EUROPÄISCHE PATENTSCHRIFT

(11) **EP 1 213 163 B1**
(45) Veröffentlichungstag und Bekanntmachung des Hinweises auf die Patenterteilung: **19.08.2009**
(21) Anmeldenummer: 01127932.0
(22) Anmeldetag: 23.11.2001
(51) Int. Cl.: B60G 17/015, B60G 21/05

(54) **Verfahren und Vorrichtung zur Stabilitätsbeeinflussung von Kraftfahrzeugen**
Method and device for vehicle stability control
Procédé et dispositif de contrôle de stabilité d'un véhicule

(30) Priorität: 08.12.2000 DE 10061075
(43) Veröffentlichungstag der Anmeldung: 12.06.2002
(73) Patentinhaber: AUDI AG, 85045 Ingolstadt (DE)
(72) Erfinder: Roth, Martin, 74229 Oedheim (DE)
(74) Vertreter: le Vrang, Klaus

(56) Entgegenhaltungen:
- EP-A- 0 249 246
- EP-A- 0 310 094
- EP-A- 0 443 520
- US-A- 5 066 041
- US-A- 5 297 646
- US-A- 5 941 334
- US-A- 6 088 637
- PATENT ABSTRACTS OF JAPAN Bd. 018, Nr. 231 (M-1599), 27. April 1994 (1994-04-27) & JP 06 024230 A (NISSAN MOTOR CO LTD), 1. Februar 1994 (1994-02-01)
- PATENT ABSTRACTS OF JAPAN Bd. 016, Nr. 141 (M-1232), 9. April 1992 (1992-04-09) & JP 04 002518 A (NISSAN MOTOR CO LTD), 7. Januar 1992 (1992-01-07)

## Beschreibung

Die Erfindung betrifft ein Verfahren zur Stabilitätsbeeinflussung von Kraftfahrzeugen und Vorrichtungen für das Verfahren.

Bei heutigen Kraftfahrzeugen werden vermehrt unter der Bezeichnung ESP bekannte Vorrichtungen zur Stabilitätsbeeinflussung verbaut, die bei kritischen Fahrzuständen Regeleingriffe in das Betriebsbremssystem des Kraftfahrzeuges und eine Reduzierung des Antriebsmomentes der angetriebenen Räder des Kraftfahrzeuges steuern.

Zur Erkennung der kritischen Fahrzustände, z. B. einem beginnenden Schleudern des Kraftfahrzeuges, werden die Signale von zumindest einem Lenkwinkelsensor (Lenkwinkel, Lenkgeschwindigkeit), von Raddrehzahlsensoren, einem Querbeschleunigungssensor und einem Gierwinkeisensor erfasst und in einem elektronischen Steuergerät verarbeitet.

Liegt ein kritischer Fahrzustand vor, so werden über das Steuergerät hydraulische Zusatzeinrichtungen angesteuert, die z. B. bei einem kritischen Übersteuern des Kraftfahrzeuges in einer Kurve das kurvenäußere vordere Rad des Kraftfahrzeuges gezielt abbremsen und das Antriebsmoment an den angetriebenen Rädern durch Eingriff in das elektronische Motor- und/oder Getriebemanagement vermindern. Bei einem kritischen Untersteuern des Kraftfahrzeuges wird alternativ das kurveninnere hintere Rad gebremst.

Aus der EP 101 35 25 A1 ist ein Verfahren zur Stabilitätsbeeinflussung bekannt, bei dem über die Messung des Lenkwinkels, der Raddrehzahl und der Querbeschleunigung entschieden wird, ob ein kritischer Fahrzustand erreicht ist oder nicht.

Aus der JP 06 024230 ist ein Verfahren bekannt, bei dem ein stabiler Fahrzustand durch die Wanksteifigkeitsverteilung an der Vorder- und Hinterachse und eine Antriebskraftverteilung erzielt werden kann um das Fahrzeug auf einer horizontalen Ebene in der Kurve zu halten.
Nachteilig hierbei ist jedoch die Regelung sehr aufwendig ist und auch die Antriebskräfte und Wanksteifigkeiten permanent gemessen werden müssen.

Aus der JP 06 024230 ist ein Verfahren bekannt, bei dem ein stabiler Fahrzustand durch die Wanksteifigkeitsverteilung an der Vorder- und Hinterachse und eine Antriebskraftverteilung erzielt werden kann um das Fahrzeug auf einer horizontalen Ebene in der Kurve zu halten.
Nachteilig hierbei ist jedoch die Regelung sehr aufwendig ist und auch die Antriebskräfte und Wanksteifigkeiten permanent gemessen werden müssen verwendbar sind.

Aus der EP 101 35 25 A1 ist ein Verfahren zur Stabilitätsbeeinflussung bekannt, bei dem über die Messung des Lenkwinkels, der Raddrehzahl und der Querbeschleunigung entschieden wird, ob ein kritischer Fahrzustand erreicht ist oder nicht.
Die Beeinflussung der Wankmomentverteilung an sich und geeignete Stellmittel dazu sind bekannt. Es wird nur beispielsweise auf die Patentanmeldungen DE 198 36 674 C1, DE 198 58 417 A1 und DE 198 46 275 A1 verwiesen. Die dort beschriebenen Einrichtungen betreffen aber nicht die Verknüpfung der Wankmomentverteilung mit der vorbeschriebenen Stabilitätsbeeinflussung des Kraftfahrzeuges.

Aufgabe der Erfindung ist es, ein Verfahren und eine Vorrichtung zu der beschriebenen Stabilitätsbeeinflussung aufzuzeigen, bei dem bei zumindest gleichwertiger Fahrstabilität der Fahrkomfort weiter verbessert wird.

Die Aufgabe wird durch Verfahren gemäß Patentanspruches 1 gelöst. Hierbei werden die Fahrzustände über Sensoren erfasst und in Abhängigkeit vom Ergebnis die Wankmomentverteilung über Stelleinrichtungen gesteuert, wobei die Steuerung der Wankmomentverteilung gegenüber des Bremseingriffs bevorzugt wird und im Falle von sehr kritischen Fahrzuständen die Wankmomentverteilung gleichzeitig mit einem Bremseingriff und/oder einer Antriebsmomentenverringerung gesteuert wird.

Wird bei dem erfindungsgemäßen Verfahren z. B. ein beginnendes Übersteuern des Kraftfahrzeuges sensiert, so wird die Wankmomentverteilung zu mehr Wankstabilität an der Vorderachse des Kraftfahrzeuges durch Ansteuerung entsprechender Stelleinrichtungen geändert; dies hat neben dem bekannten Verringern der Wankneigung des Kraftfahrzeuges in der Kurve den Effekt der Entlastung des kurvenäußeren Hinterrades und der damit verbundenen erhöhten Seitenführung an der Hinterachse, die einem kritischen Übersteuern zunächst entgegenwirkt. Zugleich wird falls erforderlich eine Antriebsmomentenverringerung an den angetriebenen Rädern durch Eingriff in das elektronische Motor- und/oder Getriebemanagement eingesteuert.

Erst wenn diese Maßnahmen allein nicht greifen und die Übersteuertendenz des Kraftfahrzeuges weiter zunimmt, wobei dies über die genannten Sensoren erkannt wird, wird in bekannter Weise der Bremseneingriff - im Beispiel am kurvenäußeren Vorderrad - ausgelöst.

Bei einem Untersteuern des Kraftfahrzeuges wird alternativ die Wankmomentverteilung zu mehr Wankstabilität an der Hinterachse geändert und im übrigen wie vorbeschrieben verfahren.

Bei dem erfindungsgemäßen Verfahren wird also bei kritischen Fahrzuständen bereits früher durch Änderung der Wankmomentverteilung entgegengewirkt, wodurch häufig Bremseneingriffe überhaupt vermieden werden.

Zusätzlich zur vorbeschrieben Wankmomentverteilung bei kritischen Fahrzuständen kann auch eine Wankmomentverteilung und eine Veränderung der Wanksteifigkeit (komfortabel oder sportlich) des Kraftfahrzeuges über einen Wahlschalter eingestellt und eingeregelt werden, wobei die gleichen Sensoren nach Maßgabe entsprechender Regelalgorythmen verwendbar sind.

Ferner kann abhängig von den Haftbeiwerten der Fahrbahn eine unterschiedliche Regelstrategie im Steuergerät abgelegt sein, die z. B. bei schneebedeckter Fahrbahn und entsprechend niedrigen Haftbeiwerten eine unterschiedliche Wankmomentverteilung steuert. Hinsichtlich der Details wird auf das nachfolgende Ausführungsbeispiel verwiesen.

Eine zweckmäßige Vorrichtung zur Durchführung des Verfahrens weist gemäß Patentanspruch 10 neben den bekannten Einrichtungen zur Fahrstabilitätsreglung zusätzliche Stelleinrichtungen zum Verändern des Wankmomentes an beiden Achsen des Kraftfahrzeuges auf, wobei die Stelleinrichtungen über ein elektronisches Steuergerät nach Maßgabe zumindest der Signale der besagten Sensoren die Wankmomentverteilung steuern.

Ein Ausführungsbeispiel der Erfindung ist im folgenden mit weiteren Einzelheiten näher erläutert. Die schematische Zeichnung zeigt in
- Fig. 1: ein Kraftfahrzeug mit einer Vorderachse und einer Hinterachse und mit Einrichtungen zur Fahrstabilitätsregelung und mit zusätzlichen Einrichtungen zum Steuern der Wankmomentverteilung und der Wanksteifigkeit des Kraftfahrzeuges; und
- Fig. 2: ein Blockschaltbild zur Darstellung der Verknüpfung der die Fahrstabilität des Kraftfahrzeuges und die Wankmomentverteilung steuernden Einrichtungen.

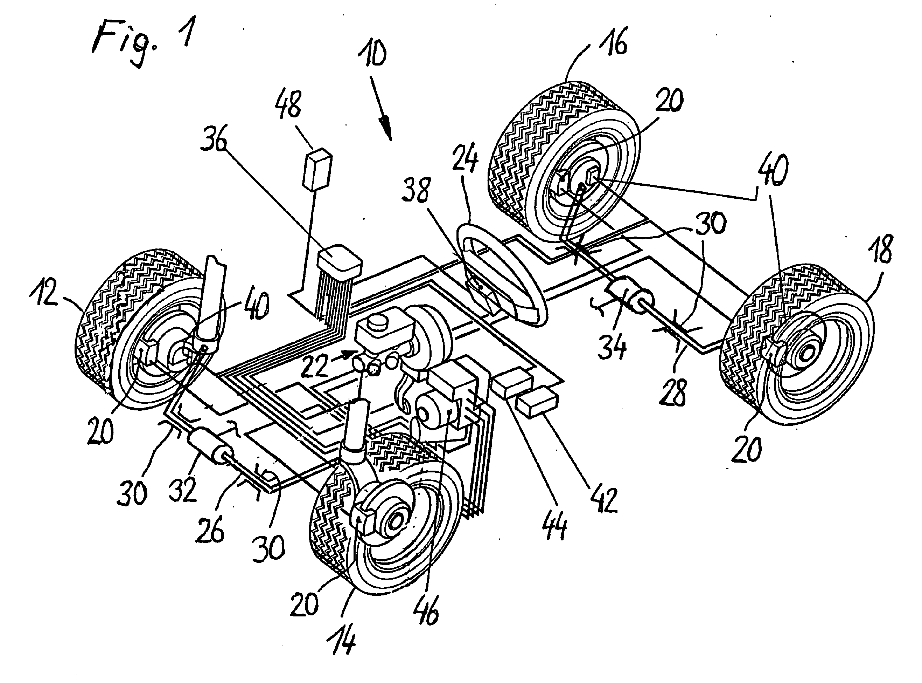

In der Fig. 1 ist soweit für das Verständnis der vorliegenden Erfindung erforderlich ein Kraftfahrzeug 10 dargestellt, mit lenkbaren und angetriebenen Vorderrädern 12,14 und mit Hinterrädern 16,18, wobei die Räder zur Bildung einer Vorderachse und einer Hinterachse in bekannter Weise an entsprechenden Radführungselementen drehbar gelagert und angelenkt sind.

Ein jedes Rad 12,14,16,18 ist mit einer Betriebsbremseinrichtung bzw. mit einer Scheibenbremse 20 versehen. Die Scheibenbremsen 20 sind über entsprechende Bremsleitungen mit einer hydraulischen Betriebsbremseinrichtung mit einem Bremszylinder, einem Bremskraftverstärker und einem Fußbremspedal (allgemein mit 22 bezeichnet) verbunden, über die die Räder willkürlich bremsbar sind.

Ferner sind die Vorderräder 12,14 über eine nicht dargestellte Lenkeinrichtung bekannter Bauart mit einem Lenkhandrad 24 lenkbar.

An der Vorderachse und an der Hinterachse des Kraftfahrzeuges 10 ist je ein U-förmiger Stabilisator 26,28 in an sich bekannter Weise mit seinen frei abragenden Schenkeln an Radführungselementen der Räder 12,14,16,18 angelenkt und über Lager 30 an der nicht dargestellten Karosserie des Kraftfahrzeuges 10 verdrehbar gehalten.

Die Stabilisatoren 26,28 sind in der senkrechten Längsmittelebene des Kraftfahrzeuges 10 geteilt und mittels der hydraulisch betätigbaren Stelleinrichtungen 32,34 gegeneinander verdrehbar oder miteinander verbindbar. Die Beaufschlagung der Stelleinrichtungen 32,34 erfolgt über eine elektrohydraulische Druckmittelquelle (nicht dargestellt), die über Leitungen mit den Stelleinrichtungen 32,34 verbunden ist. Die Stelleinrichtungen 32,34 können im Detail beispielsweise wie in den eingangs genannten Patentanmeldungen ausgeführt sein.

Das Kraftfahrzeug 10 ist mit einem elektronischen Fahrdynamik-Regelsystem ausgestattet, das ein elektronisches Steuergerät 36 aufweist. Das Steuergerät 36 ist eingangsseitig mit folgenden Sensoren signaltechnisch verbunden:
a) einem am Lenkhandrad 22 angeordnetem Lenkwinkelsensor 38, über den der Lenkwinkel und die Lenkgeschwindigkeit erfassbar sind;
b) je Rad 12,14,16,18 einem Raddrehzahlsensor 40, zur Erfassung der Raddrehzahlen und deren zeitlicher Ableitung daraus;
c) einem Querbeschleunigungssensor 42 zum Erfassen der Querbeschleunigung des Kraftfahrzeuges 10, sowie
d) einem Gierratensensor 44 zur Erfassung der Gierrate des Kraftfahrzeuges 10 um dessen Hochachse.

Das Steuergerät 36 steuert ausgangsseitig nach Maßgabe definierter Regelalgorythmen folgende Einrichtungen des Kraftfahrzeuges 10 an:
1. Eine hydraulische Druckerzeugungs- und Einspeisungseinrichtung 46, über die individuell ein jedes einzelne Rad 12,14,16,18 des Kraftfahrzeuges über die Bremseinrichtungen 20 abbremsbar ist;
2. Das elektronische Motor- und Getriebemanagement (die entsprechenden elektronischen Steuergeräte sind nicht dargestellt) zur Verringerung des Antriebsmomentes der angetriebenen Vorderräder 12,14 des Kraftfahrzeuges 10;
3. Die nicht dargestellte Druckmittelquelle mit entsprechenden Steuerventilen zur Betätigung der Stelleinheiten 32,34 zur noch zu beschreibenden Wankmomentverteilung der Vorderachse und der Hinterachse des Kraftfahrzeuges 10.

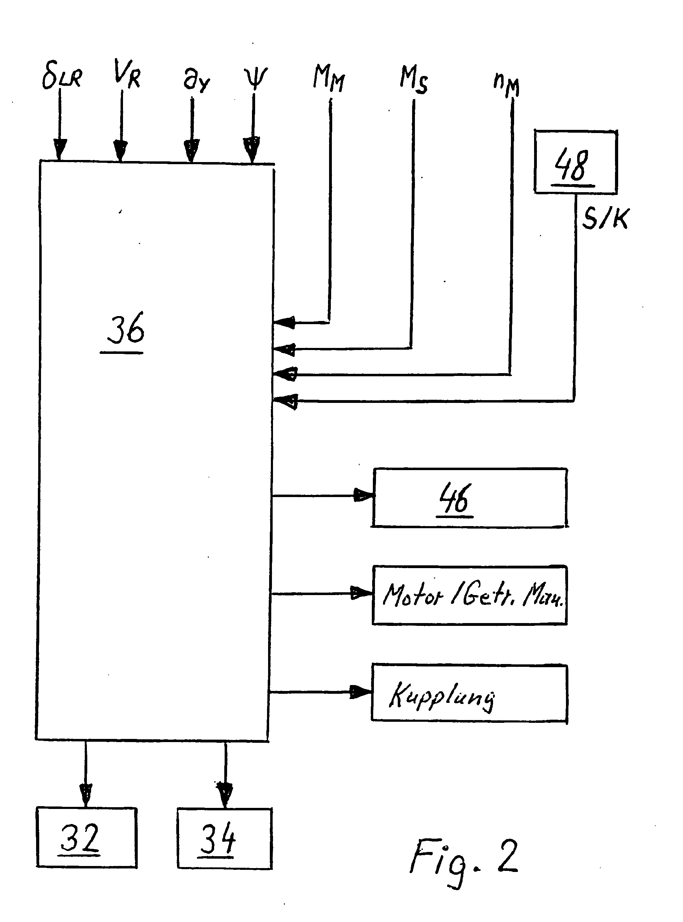

Wie in der Fig. 2 schematisch dargestellt ist, werden die Signale δ_{LR} des Lenkwinkelsensors 38, die Signale V_{R} der Raddrehzahlsensoren 40, die Signale a_{y} des Querbeschleunigungssensors 42, die Signale ψ des Gierratensensors 44 dem elektronischen Steuergerät 36 zugeleitet. Ferner werden das Antriebsmoment M_{M} und die Drehzahl n_{M} des Motors, dessen Sollantriebsmoment M_{S} (aus der Gaspedalstellung) und das Signal S/K eines Wahlschalters 48 (gemäß Fig. 1) zur sportlichen oder komfortablen Fahrwerksauslegung des Kraftfahrzeuges 10 gemäß Fahrerwunsch erfasst und steuerungstechnisch verarbeitet.

Zunächst-werden in dem Steuergerät 36 die-eingehenden Fahrstabilitätssignale verarbeitet und nach bekannten Regelalgorythmen und Bewegungsgleichungen ein Referenzmodell Fahrzeug abgebildet. Beispielsweise erkennt vereinfacht ausgedrückt das Steuergerät 36 über den Lenkwinkelsensor 38 und die Raddrehzahlsensoren 40 das Durchfahren einer Kurve bzw. die gewünschte Fahrtrichtung. Durch Auswertung der Querbeschleunigungssignale und des Gierratensensors wird erkannt, wohin sich das Kraftfahrzeug 10 tatsächlich bewegt.

Wird ein beginnender kritischer Fahrzustand durch Vergleich der gespeicherten Referenzdaten mit den Ist-Daten erkannt, so wird bei einem ersten Schwellwert über die Stelleinheiten 32,34 die vorgegebene Wankmomentverteilung verändert, in dem die Stabilisatorhälften der Stabilisatoren 26,28 gegeneinander verdreht werden, so dass sich z. B. die Wanksteifigkeit (= Rollneigung des Kraftfahrzeuges 10 in der Kurve über dessen Rollachse) der Vorderachse erhöht und die Wanksteifigkeit der Hinterachse vermindert.

Bei Erreichen eines zweiten Schwellwertes bzw. bei zunehmender Tendenz zur Instabilität des Kraftfahrzeuges 10 wird von dem Steuergerät 36 eine Antriebsmomentenverringerung gesteuert, wobei das Steuergerät 36 mit den nicht dargestellten Steuergeräten des Motormanagements und des Getriebemanagements entsprechend kommuniziert. Dabei kann die Kraftstoffzufuhr zum Motor gedrosselt, eine längere Getriebeübersetzung geschaltet oder sogar über eine Kupplung das Antriebsmoment gänzlich abgeschaltet werden.

Bedingt auch dieser steuerungstechnische zweite Schritt noch keine Tendenz der Abnahme des kritischen Fahrzustandes, so wird als dritter Schritt individuell wie an sich bekannt eine Abbremsung des kurvenäußeren Vorderrades 12 oder 14 oder kurveninneren Hinterrades 16 oder 18 ausgelöst.

Die beschriebenen drei Schritte können bei extrem kritischem Fahrzustand (z. B. bei plötzlichem panikartigem Einlenken der Vorderräder bei höherer Fahrzeuggeschwindigkeit) auch gleichzeitig gesteuert werden, wenn der entsprechende dritte Schwellwert innerhalb des jeweiligen Bereichnungsintervalls des Steuergerätes 36 liegt.

Wird über die Fahrstabilitätssignale ein niedrigerer Haftbeiwert der Fahrbahn erkannt (aufgrund der Radbeschleunigung oder -verzögerung beim Beschleunigen des Kraftfahrzeuges oder-bei Bremsvorgängen, aufgrund abnormer Querbeschleunigungs- und/oder Gierratensignale, etc.), so schaltet das Steuergerät 36 auf eine veränderte Wankmomentverteilung und auf andere Schwellwerte um. Diese Umschaltung kann gleitend und dem jeweiligen Haftbeiwert zwischen trockener Fahrbahn und eisglatter Fahrbahn angepasst sein.

Die Funktion und Strategie des beschriebenen Fahrdynamikregelsystems und der Wankmomentverteilung über das Steuergerät 36 ist im wesentlichen wie folgt:

Bei erkannter Geradeausfahrt des Kraftfahrzeuges 10 wird eine geringe Wanksteifigkeit der Achsen eingeregelt, um den Fahrkomfort zu erhöhen. Dies kann bedeuten, dass die beiden Stabilisatorhälften der jeweiligen Stabilisatoren 26,28 über die Stelleinheiten 32,34 lediglich miteinander verbunden sind (Grundauslegung). Ist über den Wahlschalter 48 von dem Fahrer eine sportliche Auslegung gewünscht, so wird über die Stelleinheiten 32,34 eine höhere Wanksteifigkeit an der Vorderachse und an der Hinterachse verwirklicht.

Ferner wird bei Lenkeinschlägen die Wanksteifigkeit der Achsen in Abhängigkeit der Lenkgeschwindigkeit, dem Lenkwinkel und der später resultierenden Querbeschleunigung und von der gewählten Auslegung sportlich oder komfortabel entsprechend erhöht. Die Wankmomentverteilung erfolgt in Abhängigkeit der Achslasten und ebenfalls gemäß dem Fahrerwunsch sportlich oder komfortabel. Mehr Wanksteifigkeit an der Hinterachse wird bei eher sportlichen Wunsch und kleiner Geschwindigkeit, mehr Wanksteifigkeit an der Vorderachse bei eher komfortablem Wunsch und größerer Geschwindigkeit eingestellt.

Bei beginnender Tendenz eines kritischen Fahrzustandes in Richtung untersteuern (hinausschieben aus der Kurve) werden zunächst zwei Maßnahmen eingeleitet:
a) Entlastung des kurvenäußeren Vorderrades durch mehr Wanksteifigkeit an der Hinterachse und wenige Wanksteifigkeit an der Vorderachse;
b) Reduzierung von Längskräften an der Vorderachse durch reduzieren (bei Zug) oder erhöhen (bei Schub) des Motormoments bei angetriebener Vorderachse; oder
   Hochschalten des Getriebes bei angetriebener Vorderachse; oder
   Auskuppeln der Antriebsverbindung.

Bei beginnender Tendenz zu einem kritischen Fahrzustand in Richtung Übersteuern (hineindrehen in die Kurve) werden die nachstehenden Maßnahmen eingeleitet:
a) Entlastung des kurvenäußern Hinterrades durch mehr Wanksteifigkeit an der Vorderachse und weniger Wanksteifigkeit an der Hinterachse;
b) Reduzierung der Längskräfte an der Hinterachse durch
   reduzieren oder erhöhen des Motormoments bei angetriebener Hinterachse; oder
   lösen der Betriebsbremse, sofern betätigt; oder
   hochschalten des Getriebes, wenn die Hinterachse angetrieben ist; oder
   abkuppeln der Antriebsverbindung.

Wenn das Untersteuern bzw. das Übersteuern gestoppt ist, kann die beschriebene Wankmomentverteilung so lange aktiviert bleiben, bis ein Schwimmwinkel an den Reifen errechnet ist, der den Benutzerprogramm entspricht. Z. B. wird bei einer sportlichen Einstellung ein leichtes Übersteuern bzw. bei einer Komforteinstellung eher ein leichtes Untersteuern eingeregelt.

Bei niedrigen Reibwerten, z. B. durch Schnee, wird die weitere Regelstrategie verfolgt, da die physikalischen Effekte entgegengesetzt Wirkungen zeigen. Bei Kurvenfahrt wird der kurvenäußere Reifen durch die dynamische Gewichtsverlagerung mit mehr Normalkraft beaufschlagt. Dadurch steigt seien Fähigkeit, Seitenführungskraft zu übertragen. Beim kurveninneren Rad kehrt sich dies um: Sinkende Normalkraft verringert die Fähigkeit, Seitenführungskraft zu übertragen. Bei hohen Reibwerten, z. B. trockene Asphaltstraße, nimmt jedoch die Fähigkeit des kurvenäußeren Reifens (bei gleichem Schräglaufwinkel) nicht so zu, wie sie am kurveninnern Rad abnimmt. Durch Erhöhung des Schräglaufwinkels kann dies bis zu gegebenen Grenzen des Reifens kompensiert werden. Auf diese Effekte beruht die Regelstrategie der Fahrdynamikregelung durch Wankmomentregelung bei normalen Haftbeiwerten. Bei Schnee nimmt jedoch die Fähigkeit des kurvenäußeren Reifens (bei gleichem Schräglaufwinkel) mehr zu als sie am kurveninneren Rad abnimmt. Dies kann damit erklärt werden, dass der Schnee unter der höheren Flächenpressung stärker zu einer festen Masse verdichtet wird, die dem Profil des Reifens mehr Halt bietet. Daher ergibt sich für niedrigere Haftbeiwerte:

Bei erkannter Tendenz eines kritischen Fahrzustandes in Richtung Untersteuern werden
a) die Belastung des kurvenäußeren Vorderrades durch mehr Wanksteifigkeit an der Vorderachse und weniger Wanksteifigkeit an der Hinterachse erhöht;
b) die Längskräfte an der Vorderachse durch reduzieren oder erhöhen des Motormoments bei angetriebenen Vorderrädern vermindert, insbesondere durch Hochschalten des Getriebes oder durch Auskuppeln.

Andererseits wird bei beginnender Tendenz zu einem kritischen Fahrzustand in Richtung Übersteuern
a) die Belastung des kurvenäußeren Hinterrades durch mehr Wanksteifigkeit an der Hinterachse und weniger Wanksteifigkeit an der Vorderachse erhöht; und
b) die Längskräfte an der Hinterachse ausreichend vermindert -
   entweder durch reduzieren oder erhöhen des Antriebsmomentes bei angetriebener Hinterachse; oder
   durch Hochschalten des Getriebes; oder
   durch Auskuppeln der Antriebsverbindung.

Die vorbeschriebenen Maßnahmen zur Verminderung der Längskräfte an der Vorderachse oder an der Hinterachse können bei gleichzeitiger willkürlicher Betätigung der Betriebsbremse des Kraftfahrzeuges auch das gezielte Verringern des Bremsmomentes beinhalten, beispielsweise bei üblicherweise gegen Blockieren der Räder geregelten Betriebsbremsen (ABS) durch entsprechende Modifikation der in dem einheitlichem Steuergerät 36 abgelegten Anti-Blockier-Regelalgorythmen.

Bei semiaktiv oder aktiv geregelten Fahrwerken mit z. B. in der Dämpfungsrate und/oder Federrate variablen Stoßdämpfern oder Federbeinen können diese zur vorgeschlagenen Wankmomentverteilung entsprechend angesteuert werden.

## Patentansprüche

1. Verfahren zur Stabilitätsbeeinflussung von Kraftfahrzeugen, mit einem elektronischen Fahrdynamikregelsystem, über das bei definierten Fahrzuständen Regeleingriffe in das Betriebsbremssystem des Kraftfahrzeuges und/oder in das Antriebssystem zur Verringerung des Antriebsmomentes der angetriebenen Räder des Kraftfahrzeuges gesteuert werden, bei dem:
- die Fahrzustände über zumindest einen Lenkwinkelsensor, über Raddrehzahlsensoren, über einen eine Querbeschleunigung des Kraftfahrzeuges erfassenden Querbeschleunigungssensor und über einen Gierratensensor erfasst werden
- die Wankmomentverteilung an der Vorderachse und an der Hinterachse des Kraftfahrzeuges über die genannten Sensoren und durch Ansteuerung entsprechender, das Wankmoment verändernder Stelleinrichtungen (32,34) gesteuert wird
- die Wankmomentverteilung mit Priorität vor einem Bremseneingriff gesteuert wird und
- die Wankmomentverteilung bei definierten höherkritischen Fahrzuständen des Kraftfahrzeuges gleichzeitig mit einem Bremseneingriff und/oder einer Antriebsmomentenverringerung gesteuert wird.

2. Verfahren nach Anspruch 1, **dadurch gekennzeichnet, dass** bei unkritischen Fahrzuständen des Kraftfahrzeuges die Wankmomentverteilung und/oder die Wanksteifigkeit insgesamt willkürlich in zumindest zwei Strategien (komfortabel oder sportlich ) veränderbar ist.

3. Verfahren nach Anspruch 1 oder 2, **dadurch gekennzeichnet, dass** beim Durchfahren von Kurven des Kraftfahrzeuges in Abhängigkeit des Lenkeinschlagwinkels und/oder der Lenkgeschwindigkeit und/oder der resultierenden Querbeschleunigung des Kraftfahrzeuges die Wanksteifigkeit allgemein erhöht wird.

4. Verfahren nach einem oder mehreren der Ansprüche 1 bis 3, **dadurch gekennzeichnet, dass** bei einem Übersteuern des Kraftfahrzeuges in Kurven die Wankmomentverteilung so geändert wird, dass die Wanksteifigkeit der Vorderachse erhöht und/oder die Wanksteifigkeit der Hinterachse vermindert wird.

5. Verfahren nach den Ansprüchen 1 bis 4, **dadurch gekennzeichnet, dass** bei einem Untersteuern des Kraftfahrzeuges in Kurven die Wankmomentverteilung so geändert wird, dass die Wanksteifigkeit der Hinterachse erhöht und/oder die Wanksteifigkeit der Vorderachse vermindert wird.

6. Verfahren nach den Ansprüchen 4 und 5. **dadurch gekennzeichnet, dass** zusätzlich bei den angetriebenen Rädern des Kraftfahrzeuges die Längskräfte durch Vermindern (bei Zug) oder durch Erhöhen (bei Schub) des Antriebsmomentes verringert werden.

7. Verfahren nach einem oder mehreren der Ansprüche 1 bis 6, **dadurch gekennzeichnet, dass** zusätzlich zur Wankmomentverteilung bei kritischen Fahrzuständen Eingriffe in die Kupplungssteuerung des Antriebssystems des Kraftfahrzeuges und/oder in die Getriebesteuerung erfolgen, um das Antriebsmoment an den angetriebenen Rädern des Kraftfahrzeuges zu unterbrechen oder durch Wechsel der Getriebeübersetzung zu vermindern.

8. Verfahren nach einem oder mehreren der vorhergehenden Ansprüche, **dadurch gekennzeichnet, dass** bei erkanntem vermindertem Haftbeiwert der Fahrbahn die Wankmomentverteilung in einer modifizierten, im Steuergerät abgelegten Regelstrategie gesteuert wird.

9. Verfahren nach Anspruch 8, **dadurch gekennzeichnet, dass** bei einem Übersteuern des Kraftfahrzeuges in Kurven die Wanksteifigkeit der Hinterachse erhöht und/oder die Wanksteifigkeit der Vorderachse vermindert und bei einem Untersteuern des Kraftfahrzeuges die Wanksteifigkeit der Vorderachse erhöht und/oder die der Hinterachse vermindert wird.

10. Vorrichtung für ein Verfahren nach Anspruch 1, **dadurch gekennzeichnet, dass** beide Achsen des Kraftfahrzeuges (10) mit Stelleinrichtungen (32,34) versehen sind.

11. Vorrichtung nach Anspruch 10, **dadurch gekennzeichnet, dass** die Stelleinrichtungen (32,34) zur Wankmomentverteilung über ein einheitliches elektronisches Steuergerät (36) für die gesamte Fahrdynamikregelung angesteuert werden.

12. Vorrichtung nach einem der Ansprüche 10 bis 11, **dadurch gekennzeichnet, dass** die Stelleinrichtungen (32,34) hydraulische oder elektromotorlsche Stellmotoren sind, die in die Querstabilisatoren (26,28) der Achsen des Kraftfahrzeuges integriert sind.

## Claims

1. Method for vehicle stability control with an electronic control system for the dynamics of vehicle movement, which under defined driving conditions control operations in the service brake system of the vehicle and/or the drive system are controlled to reduce the driving moment of the driven wheels of the vehicle, in which:
- the driving conditions are detected though at least one steering angle sensor, wheel speed sensors, a lateral acceleration sensor detecting the lateral acceleration of the vehicle and a yaw sensor
- the distribution of the rolling moment on the front axle and the rear axle of the vehicle is controlled through the sensors indicated and through control of the relevant adjustment devices (32, 34) changing the rolling moment
- the distribution of the rolling moment is controlled with priority before a braking operation and
- the distribution of the rolling moment under defined highly critical driving conditions of the vehicle is controlled at the same time with a braking operation and/or a reduction in driving moment.

2. Method according to claim 1, **characterised in that** under non-critical driving conditions of the vehicle the distribution of the rolling moment and/or the rolling rigidity may be changed completely arbitrarily in at least two strategies (comfortable or sporty).

3. Method according to claim 1 or 2, **characterised in that** with the vehicle driving through bends depending on the angle of lock and/or steering speed and/or resulting lateral acceleration of the vehicle the rolling rigidity is generally increased.

4. Method according to one or several of claims 1 to 3, **characterised in that** with oversteering of the vehicle in bends the distribution of the rolling moment is changed so that the rolling rigidity of the front axle is increased and/or the rolling rigidity of the rear axle is reduced.

5. Method according to claims 1 to 4, **characterised in that** with understeering of the vehicle in bends the distribution of the rolling moment is changed so that the rolling rigidity of the rear axle is increased and/or the rolling rigidity of the front axle is reduced.

6. Method according to claims 4 and 5, **characterised in that** also with the driven wheels of the vehicle the longitudinal forces are reduced by reducing (by pulling) or increasing (by pushing) the driving moment.

7. Method according to one or several of claims 1 to 6, **characterised in that** in addition to the distribution of the rolling moment under critical driving conditions there are operations in the clutch control of the drive system of the vehicle and/or in the gear control, in order to interrupt the driving moment on the driven wheels of the vehicle or to reduce it by changing the gear transmission.

8. Method according to one or several of the previous claims, **characterised in that** with recognised reduced road holding the distribution of the rolling moment is controlled in a modified control strategy stored in the control equipment.

9. Method according to claim 8, **characterised in that** with oversteering of the vehicle in bends the rolling rigidity of the rear axle is increased and/or the rolling rigidity of the front axle is reduced and with understeering of the vehicle the rolling rigidity of the front axle is increased and/or that of the rear axle is reduced.

10. Device for a method according to claim 1, **characterised in that** both axles of the vehicle (10) are provided with adjustment devices (32,34).

11. Device according to claim 10, **characterised in that** the adjustment devices (32, 34) for distribution of the rolling moment are controlled through a single electronic control device (36) for the complete control of the dynamics of vehicle movement.

12. Device according to one of claims 10 to 11, **characterised in that** the control devices (32, 34) are hydraulic or electromotive actuators, which are integrated into the lateral stabilisers (26, 28) of the axles of the vehicle.

## Revendications

1. Procédé de contrôle de stabilité de véhicules automobiles, avec un système électronique de régulation de la dynamique du mouvement des véhicules, via lequel en cas d'états de conduite définis, des interventions de régulation dans le système de freinage de service du véhicule automobile et/ou dans le système d'entraînement sont commandées pour la diminution du couple moteur des roues motrices du véhicule automobile, pour lequel :
- les états de conduite sont détectés par au moins un capteur d'angle de braquage, par des capteurs de vitesse de roue, par un capteur d'accélération transversale détectant une accélération transversale du véhicule automobile et par un capteur de vitesse d'embardée,
- la répartition du couple de roulis sur l'essieu avant et sur l'essieu arrière du véhicule automobile est commandée via lesdits capteurs et par la commande de dispositifs de commande (32, 34) correspondants, modifiant le couple de roulis,
- la répartition du couple de roulis est commandée avec priorité sur une intervention de freinage et
- la répartition du couple de roulis étant commandée en cas d'états de conduite définis très critiques du véhicule automobile simultanément avec une intervention de freinage et/ou une diminution de couple moteur.

2. Procédé selon la revendication 1, **caractérisé en ce qu'**en cas d'états de conduite non critiques du véhicule automobile, la répartition du couple de roulis et/ou la rigidité au roulis peut être modifiée dans l'ensemble arbitrairement en au moins deux stratégies (confortable et sportive).

3. Procédé selon la revendication 1 ou 2, **caractérisé en ce que** lors du passage de courbes du véhicule automobile en fonction de l'angle de braquage et/ou de la vitesse de braquage et/ou de l'accélération transversale résultante du véhicule automobile, la rigidité au roulis est augmentée en général.

4. Procédé selon au moins l'une des revendications 1 à 3, **caractérisé en ce que** lors d'un survirage du véhicule automobile en courbes, la répartition du couple de roulis est modifiée de sorte que la rigidité au roulis de l'essieu avant soit augmentée et/ou la rigidité au roulis de l'essieu arrière soit réduite.

5. Procédé selon les revendications 1 à 4, **caractérisé en ce que** lors d'un sous-virage du véhicule automobile en courbes, la répartition du couple de roulis est modifiée de sorte que la rigidité au roulis de l'essieu arrière soit augmentée et/ou la rigidité au roulis de l'essieu avant soit réduite.

6. Procédé selon les revendications 4 et 5, **caractérisé en ce qu'**en cas de roues motrices du véhicule automobile, les forces longitudinales sont diminuées en outre par réduction (en cas de traction) ou par augmentation (en cas de propulsion) du couple moteur.

7. Procédé selon au moins l'une des revendications 1 à 6, **caractérisé en ce qu'**outre la répartition du couple de roulis en cas d'états de conduite critiques, des interventions sont effectuées dans la commande d'accouplement du système d'entraînement du véhicule automobile et/ou dans la commande de transmission afin d'interrompre le couple moteur sur les roues motrices du véhicule automobile ou de le réduire par changement de rapport de transmission.

8. Procédé selon au moins l'une des revendications 1 à 7, **caractérisé en ce qu'**en cas de facteur de correction d'adhérence réduit reconnu de la chaussée, la répartition du couple de roulis est commandée dans une stratégie de régulation modifiée, enregistrée dans l'appareil de commande.

9. Procédé selon la revendication 8, **caractérisé en ce qu'**en cas de survirage du véhicule automobile en courbes, la rigidité au roulis de l'essieu arrière est augmentée et/ou la rigidité au roulis de l'essieu avant est réduite et en cas de sous-virage du véhicule automobile, la rigidité au roulis de l'essieu avant est augmentée et/ou celle de l'essieu arrière est réduite.

10. Dispositif pour un procédé selon la revendication 1, **caractérisé en ce que** les deux essieux du véhicule automobile (10) sont pourvus de dispositifs de commande (32, 34).

11. Dispositif selon la revendication 10, **caractérisé en ce que** les dispositifs de commande (32, 34) sont commandés pour la répartition du couple de roulis par un appareil de commande (36) électronique, standard pour l'ensemble de la régulation de la dynamique du mouvement des véhicules.

12. Dispositif selon l'une des revendications 10 à 11, **caractérisé en ce que** les dispositifs de commande (32, 34) sont des servomoteurs hydrauliques ou à moteurs électriques qui sont intégrés dans les stabilisateurs transversaux (26, 28) des essieux du véhicule automobile.
